# EUROPÄISCHE PATENTSCHRIFT

(11) **EP 0 809 095 B1**
(45) Veröffentlichungstag und Bekanntmachung des Hinweises auf die Patenterteilung: **17.11.1999**
(21) Anmeldenummer: 97107861.3
(22) Anmeldetag: 14.05.1997
(51) Int. Cl.: G01L 3/00, H02P 7/00

(54) **Verfahren und Vorrichtung zur Messung des Abtriebsmomentes eines Elektromotors**
Method and device for measuring the output torque of an electric motor
Méthode et dispositif de mesure du couple de sortie d'un moteur electrique

(30) Priorität: 24.05.1996 DE 19621046
(43) Veröffentlichungstag der Anmeldung: 26.11.1997
(73) Patentinhaber: SKF GmbH, 97421 Schweinfurt (DE)
(72) Erfinder: Schmidt, Klemens, 97074 Würzburg (DE)
(74) Vertreter: Hetterich, Winfried

(56) Entgegenhaltungen:
- EP-A- 0 395 783
- DE-U- 29 503 416
- PATENT ABSTRACTS OF JAPAN vol. 007, no. 076 (E-167), 30.März 1983 & JP 58 003591 A (TOYO DENKI SEIZO KK), 10.Januar 1983,
- PATENT ABSTRACTS OF JAPAN vol. 004, no. 134 (P-028), 19.September 1980 & JP 55 087018 A (SHIN NIPPON KOKI KK), 1.Juli 1980,
- PATENT ABSTRACTS OF JAPAN vol. 096, no. 007, 31.Juli 1996 & JP 08 082576 A (NEC CORP), 26.März 1996,

## Beschreibung

Die Erfindung betrifft ein Verfahren und eine Vorrichtung zur Messung des Abtriebsmomentes nach den Oberbegriffen von Anspruch 1 und Anspruch 2.

Bei allen durch Motoren angetriebenen Aggregaten, Transmissionen. Anlagen etc. ist die Belastung, Beanspruchung und ursprünglich das Drehmoment eine Schlüsselgröße für das Erkennen von Fehlern, für die Früherkennung von Ausfällen oder für die Kalkulation der Lebensdauer. Bisher werden präzise Drehmomentmessungen über die elastische Verspannung oder Biegung von Hülsen, Wellen, Biegebalken, etc. durchgeführt, die mit Dehnungsmeßstreifen verschiedenster Art bestückt sind. Dies bedeutet jedoch stets einen Eingriff in die Ab- bzw. Antriebsmechanik der Anlage, ist durch die empfindlichen Verstärker teuer und durch viele Umfeldparameter fehlerbehaftet.

Weiterhin werden auch Kraftmeßlager eingesetzt, wenn die Belastung durch radiale und/oder axiale Kräfte definiert werden kann. Diese sind ebenfalls mit Dehnungsmeßstreifen versehen und erfordern ähnliche empfindliche Bausteine zur Meßwertverarbeitung.

Für den Abtrieb werden weitverbreitet elektrische Asynchron-Motoren eingesetzt, da diese preisgünstig und kompakt sind und in den überwiegenden Fällen direkt an das Netz angeschlossen werden können.

Aufgabe der Erfindung ist es, ein Verfahren und eine Vorrichtung zur Messung des Abtriebsmomentes zu schaffen, die mit einfachen Mitteln eine zuverlässige und von weniger Umwelteinflüssen geprägten Meßwert für das Abtriebsmoment liefern.

Aus der JP-A-58003591 ist eine Drehmomentsteuerung bekannt, bei der als Meßsignale der Strom, die Frequenz, die Spannung und die Drehzahl sowie der aus der Frequenz ermittelte Schlupf ausgewertet werden. Hierzu sind in einem Speicher analysierte Drehmomentwerte vorab gespeichert.

Aus der DE-U 295 03 416 ist ein Gerät zur Ermittlung der Beanspruchung von Bauteilen, Anlagen und Maschinen, die dynamischen Belastungen unterliegen, bekannt. Mit diesem bekannten Gerät werden Lastwechsel erfaßt und zu einem die Beanspruchung kennzeichnenden Wert aufsummiert. Bei Erreichen eines zulässigen Grenzwertes für die Beanspruchung wird ein Warnsignal ausgegeben.

Die Aufgabe wird gelöst durch ein Verfahren mit den Merkmalen:
- Messen der Umlaufdrehzahl des Ständerfeldes
- Messen der Rotordrehzahl
- Bildung eines Meßwertes für die Schlupfdrehzahl aus der Differenz von Rotordrehzahl und Umlaufdrehzahl
- Bildung eines Meßwertes für das Abtriebsmoment aus der Schlupfdrehzahl und statistischen motoreigenen Kennwerten für das Abtriebsmoment,
und durch eine Vorrichtung mit den Merkmalen:
- ein Adapter zur Messung der Umlaufdrehzahl des Ständerfeldes
- ein Sensor zur Messung der Rotordrehzahl
- eine Differenzschaltung zur Bildung der Schlupfdrehzahl
- ein Festwertspeicher für die motoreigene Charakteristik von Antriebsmoment in Abhängigkeit zur Schlupfdrehzahl mit einem Eingang tur die Schlupfdrehzahl und einem Ausgang für das Abtriebsmoment und
- eine Anzeigevorrichtung für das Abtriebsmoment mit Ausgängen zur Weiterverarbeitung des Meßsignals.

Die Arbeitsweise ist voll digitalisierbar und damit weitgehend gegen Umfeldeinflüsse wie Temperatur, Feuchtigkeit, Vibration, Eigenerwärmung, Schwankungen der Versorgungsspannung geschützt. Damit sind viele der Störgrößen im rauhen Anlagebetrieb vorweg unwirksam. Weiterhin bietet dieser Vorteil auch ein hohes Maß an Sicherheit, was vielen Antrieben erst dadurch die Anwendung in Gefahrensbereichen ermöglicht.

Die erfindungsgemäßen Merkmale beziehen sich auf die Verwendung eines Asynchron-Motors als Antriebsmaschine für die vielfältigsten Anlagen, etc. Das Verfahren zeigt die Verarbeitung der Meßwerte, die Vorrichtung einen kompakten Schaltungsbaustein, mit Eingängen für die Meßwerte und Ausgängen für Signal- und Steuerspannungen zur Anzeige oder Weiterverarbeitung.

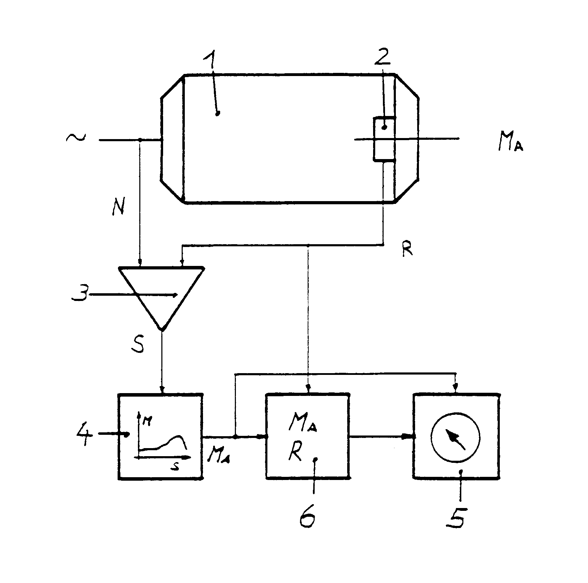

Die Merkmale werden nachfolgend an dem in der Zeichnung dargestellten Beispiel beschrieben.

Die einzige Figur zeigt das Blockschaltbild einer Vorrichtung zur Messung des Abtriebsmomentes bei einem Asynchron-Motor 1. Dieser ist mit einem Wälzlager 2 versehen, das in bekannter Weise einen elektrischen Ausgang aufweist, der eine der Rotordrehzahl R proportionale Impulsfolge liefert. Ein weiterer Meßwert N wird durch eine der Ständerfrequenz des Asynchron-Motors 1 oder der Netzspeisefrequenz entsprechende Pulsfolge gebildet. In einer Differenzstufe 3 wird aus den beiden Meßwerten R, H eine Differenz-Impulsfolge gebildet, die der Schlupfdrehzahl S des Asynchron-Motors 1 proportional ist. Die Schlupfdrehzahl S erhöht sich mit dem Abtriebsmoment M_{A}, ist diesem jedoch nicht streng proportional und von anderen Motorspezifikationen und Konstruktionsmerkmalen abhängig. Aus diesem Grund ist ein Rechenbaustein 4 mit Festwertspeicher vorgesehen, in dem die dem jeweiligen Motortyp entsprechende Kennkurve "Abtriebsmoment M_{A}/Schlupfdrehzahl S" gespeichert ist. Das Ausgangssignal bildet damit für jede Schlupfdrehzahl S den korrekten Wert für das Abtriebsmoment M_{A}. Es wird in einem handelsüblichen Display 5 zur Anzeige gebracht oder kann auch anderweitig weiterverarbeitet, gegebenenfalls über Grenzwertstufen zur Überwachung verwendet werden.

Eine weitere Verwendung ergibt sich in Verbindung mit einem Zähler 6, der die Gesamtheit eines wirksamen Abtriebsmomentes M_{A} - etwa durch die Summe aller Umdrehungen des Rotors - aufsummiert, und mit dem jeweiligen Wert des Abtriebsmomentes M_{A} verrechnet. Dabei kann der verbrauchte Wert von Lebensdauer einer statistischen Lebensdauerbasis abgebucht werden, um die Restlebensdauer, beispielsweise von Lagerungen und anderen Triebwerksteilen, anzuzeigen.

## Patentansprüche

1. Verfahren zur Messung des Abtriebsmomentes eines Asynchron-Motors durch
- Messen der Umlaufdrehzahl N des Ständerfeldes ;
- Messen der Rotordrehzahl R ;
- Bildung eines Meßwertes für die Schlupfdrehzahl S aus der Differenz von Rotordrehzahl R und Umlaufdrehzahl N gekennzeichnet durch
- Bildung eines Meßwertes für das Abtriebsmomen M_{A} aus der Schlupfdrehzahl S und statistischen, motoreigenen Kennwerten für das Abtriebsmoment M_{A} und
- Bildung eines Meßwertes für die Beanspruchung aus Rotordrehzahl R und Abtriebsmoment M_{A}.

2. Vorrichtung zur Messung des Abtriebsmomentes eines Asynchron-Motors nach dem in Anspruch 1 gekennzeichneten Verfahren, umfassend
- einen Adapter zur Messung der Umlaufdrehzahl N des Ständerfeldes
- einen Sensor (2) zur Messung der Rotordrehzahl R
- eine Differenzschaltung (3) zur Bildung der Schlupfdrehzahl S, gekennzeichnet durch
- einen Festwertspeicher (4) für die motoreigene Charakteristik von Abtriebsmoment M_{A} in Abhängigkeit zur Schlupfdrehzahl S mit einem Eingang für die Schlupfdrehzahl S und einem Ausgang für das Abtriebsmoment M_{A}
- eine Anzeigevorrichtung (5) für das Abtriebsmoment M mit Ausgängen zur Weiterverarbeitung des Meßsignals und
- einen Schaltungsbaustein (6) zur Bildung eines Meßwertes aus Abtriebsmoment M_{A} und Abtriebsdrehzahl R für die Beanspruchung der durch den Asynchron-Motor (1) angetriebenen Einheit.

3. Vorrichtung nach Anspruch 2, gekennzeichnet durch die Ausführung eines der Motorlager (2) als Sensorlager zur Messung der Rotordrehzahl R.

## Claims

1. Method for measuring the output torque of an asynchronous motor by
- measuring the rotational speed N of the stator field;
- measuring the rotor speed R,
- forming a measured value for the slip speed S from the difference between the rotor speed R and the rotational speed N, characterised by
- formation of a measured value for the output torque M_{A} from the slip speed S and statistical characteristic values, specific to the motor, for the output torque M_{A} and
- formation of a measured value for the demand from rotor speed R and output torque M_{A}.

2. Appliance for measuring the output torque of an asynchronous motor in accordance with the method characterised in Claim 1, characterised by
- an adapter for measuring the rotational speed N of the stator field
- a sensor (2) for measuring the rotor speed R
- a difference circuit (3) for forming the slip speed S, characterised by
- a fixed value memory (4) for the characteristic, specific to the motor, of output torque M_{A} as a function of slip speed S with an input for the slip speed S and an output for the output torque M_{A}
- a display appliance (5) for the output torque M with outputs for futher processing of the measured signal and
- a circuit module (6) for forming a measured value from output torque M_{A} and output speed R for the demand by the unit driven by the asynchronous motor (1).

3. Appliance according to Claim 2, characterised by the configuration of a motor bearing (2) as a sensor bearing for measuring the rotor speed R.

## Revendications

1. Procédé de mesure du couple de sortie d'un moteur asynchrone par:
- mesure du régime de rotation N du champ inducteur;
- mesure du régime R du rotor;
- formation d'une valeur de mesure pour le régime de glissement S à partir de la différence du régime R du rotor et du régime de rotation N;
caractérisé par:
- la formation d'une valeur de mesure pour le couple de sortie M_{A}, à partir du régime de glissement S et de caractéristiques statistiques du couple de sortie M_{A}, spécifiques du moteur; et
- la formation d'une valeur de mesure pour la sollicitation à partir du régime R du rotor et du couple de sortie M_{A}.

2. Dispositif de mesure du couple de sortie d'un moteur asynchrone suivant le procéde selon la revendication 1, caractérisé par:
- un adaptateur pour la mesure du régime de rotation N du champ inducteur;
- un détecteur (2) pour la mesure de régime R du rotor;
- un circuit de différenciation (3) pour la formation du régime de glissement (S)
caractérisé par:
- une mémoire fixe (4) pour la caractéristique, spécifique du moteur, du couple de sortie M_{A} en fonction du régime de glissement S, avec une entrée pour le régime de glissement S et une sortie pour le couple de sorite (M_{A});
- un dispositif de visualisation (5) pour le couple de sorite M_{A} avec des sorties pour le traitement ultérieur du signal de mesure; et
- un composant de circuit (6) pour la formation, à partir du couple de sortie M_{A} et du régime R du rotor, d'une valeur de mesure pour la sollicitation de 1-unité entraînée par le moteur asynchrone (1).

3. Dispositif suivant la revendication 2, caractérisé par la réalisation de l'un des paliers (2) du moteur en tant que palier à détecteur pour la mesure du régime R du rotor.
